# EUROPEAN PATENT SPECIFICATION

(11) **EP 3 018 223 B1**
(45) Date of publication and mention of the grant of the patent: **30.05.2018**
(21) Application number: 14819390.7
(22) Date of filing: 04.07.2014
(51) Int. Cl.: C22C 21/00, B23K 35/22, B23K 35/28, C22F 1/04, F28F 21/08, C22F 1/00, C22C 21/04

(54) **BRAZING SHEET FOR HEAT EXCHANGER, AND METHOD FOR MANUFACTURING SAID SHEET**
HARTLÖTBLECH FÜR WÄRMETAUSCHER UND VERFAHREN ZUR HERSTELLUNG DIESES BLECHS
TÔLE À BRASAGE POUR UN ÉCHANGEUR DE CHALEUR ET PROCÉDÉ PERMETTANT DE FABRIQUER LADITE TÔLE

(30) Priority: 05.07.2013 JP 2013142159
(43) Date of publication of application: 11.05.2016
(73) Proprietor: UACJ Corporation, Tokyo 100-0004 (JP)
(72) Inventor: KANNO, Yoshimasa, Tokyo 100-0004 (JP); TANAKA, Satoshi, Tokyo 100-0004 (JP); TERAYAMA, Kazuko, Tokyo 100-0004 (JP)
(74) Representative: Forstmeyer, Dietmar
(86) International application number: PCT/JP2014/067974
(87) International publication number: WO 2015/002315

(56) References cited:
- EP-A2- 1 686 343
- JP-A- H1 017 969
- JP-A- 2005 060 790
- JP-A- 2005 060 790
- JP-A- 2010 209 444

## Description

### TECHNICAL FIELD

The present invention relates to a heat exchanger excellent in durability against corrosion, and a fin material used therein. More particularly, the present invention relates to: a heat exchanger which is useful for automotive applications, such as condensers for car air conditioning, evaporators, oil coolers, and radiators; a heat exchanger, for example, for a condenser for room air conditioning; and a fin material used therein.

### BACKGROUND ART

Aluminum alloys have been frequently used as materials for heat exchangers for automobiles and the like, from the viewpoint that aluminum alloys are excellent in heat conductivity and lightweight, can realize high corrosion resistance through appropriate treatments, and enable efficient joining through brazing by utilizing a brazing sheet. However, in recent years, an enhancement of the performance of heat exchangers to have higher durability with lighter weight has been needed, in order to cope with the on-going enhancement in the performance of automobiles, or with environmental issues. Thus, there is a demand for aluminum alloy material technique that can cope with those needs.

For example, in regard to heat exchangers that are represented by condensers of car air conditioners and evaporators, weight reduction caused by making tubes, fins or the like thinner (down-sheet metal gauging of the tubes, fins, and the like) is still in progress. Further, surface treatments by chromate-type chemical conversion, which are highly effective in corrosion prevention, tend to be abated by regulations of environmental aspects. Thus, the progress of corrosion of fillets is accelerated, and fins become easily peelable-off (or separable) from aluminum tubular bodies. Further, there are an increasing number of factors that accelerate corrosion of brazed joints, such as the use of large quantities of snow melting materials, air pollution, acidic rain, and the like.

As one form of automotive heat exchangers, used has been a heat exchanger produced: by combining a fin material obtained by corrugation-forming of a filler material-clad brazing sheet, with tubes produced by an extrusion method or the like; and braze-joining the fin material and the tubes. Since these tubes are intended to allow a fluid, such as a coolant, to flow through, if leakage occurs due to pitting corrosion, this leakage causes catastrophic damage when the tubes are to be used in heat exchangers. Regarding an effective corrosion preventive method of suppressing pitting corrosion of tubes, has been generally employed, in which the method forms a zinc (Zn)-concentrated layer on the tube surface by a thermal spraying method or the like, for thereby causing this zinc-concentrated layer to play the role of a sacrificial material that is more basic (lower) in electric potential. Further, in order to make the fin to have a slight sacrificing effect, zinc or the like is contained in the fin material for the purpose of securing the corrosion-resistance of the tubes.

In addition to those, peeling-off or missing of fins caused by corrosion of the fin itself or the joint with tubes also poses a problem because the heat exchange function is deteriorated. Fins may also be subjected to external forces caused by wind, washing water streams or the like at the time of actual use, and thus it is necessary to maintain the mechanical strength of the fin so that the fin is not destroyed even if corrosion has progressed to a certain extent. Particularly, in the case of making a fin thinner, the technical difficulty for securing durability of the fin itself and the joints is even further increased. Also, in order to maintain or enhance the characteristics of the heat exchanger, strength-enhancement of the fin material is essential. However, at the time of solder melting and heating of a brazing sheet, silicon (Si) in the molten solder diffuses into a core alloy, and the Si concentration in the core alloy increases. At that time, if the Si concentration increases, the melting point of the core alloy is lowered, and at the time of melting the solder, the solder erosion of the core alloy and fusion of the core alloy are apt to occur. This phenomenon becomes more noticeable as the core alloy thickness is reduced, and the mechanical strength is lowered, so that buckling of the fin is apt to occur at the time of solder melting.

Patent Literature 1 describes a fin material (a clad fin material) excellent in brazing joinability to tube materials and excellent in intergranular corrosiveness, and a heat exchanger using this fin material. In regard to the intergranular corrosiveness, it is said that intergranular corrosion resistance of the fin can be enhanced by controlling the Si concentrations at the thickness center and fin surface after brazing. The specific brazing method described in this Patent Literature 1 is not necessarily clear. However, Patent Literature 1 describes a method of raising the temperature to 450°C to the brazing temperature (about 600°C), and setting the brazing time period taken to cool down the temperature to the solidification temperature of solder, to 15 minutes or less, and preferably to 10 minutes or less. In the invention described in this Patent Literature 1, the core alloy before brazing has a fibrous microstructure, the grain size becomes finer at the time of brazing heating, and as the sheet thickness becomes thinner, it is more difficult to prevent buckling of the fin at the time of braze-heating.

Further, in Patent Literature 1, further in Examples thereof, corrosiveness and the like are evaluated for a test material obtained by combining a zinc-surface treated pure aluminum-based tube and a clad fin material. However, although it is disclosed that copper (Cu) is contained in an amount of 0.1 weight% or less in the filler material of the clad fin material, the action of Cu is not clearly shown. Further, no consideration is taken on the corrosion resistance of the brazed joints.

In Patent Literature 2, it is described that, when the amount of Zn deposition of a Zn-coated aluminum tubular body, the amount of Zn in the core alloy of the fin material, and the amount of Cu in the filler material are controlled, the difference between the spontaneous potential of the inner circumference of the aluminum tubular body and the spontaneous potential of the fin is set to 80 mV or more, peeling-off of the fin from the aluminum tubular body caused by corrosion can be prevented. However, in Patent Literature 2 as well, it is considered preferable that the microstructure before braze-heating is a fibrous microstructure, and along with making the fin thinner, it is difficult to prevent buckling of the fin at the time of braze-heating. Also, no particular mention is made on precipitates in the core alloy microstructure.

### CITATION LIST

### PATENT LITERATURE

Patent Literature 1: JP-A-2004-084060 ("JP-A" means unexamined published Japanese patent application)
Patent Literature 2: JP-A-2005-060790

### SUMMARY OF INVENTION

### TECHNICAL PROBLEM

Therefore, on the occasion of performing of making the fin material thinner, it is needed to enhance the resistance to high-temperature buckling property of the fin, and to suppress corrosion resistance of the fin itself as well as preferential corrosion of fillets. The inventors of the present invention, having conducted various studies in order to solve this problem, as a result, have found that, when a fin material is braze-joined to an aluminum tubular body having Zn coated thereon by thermal spraying, Zn diffuses into the fillet part between the aluminum tubular body and the fin material, the fillet part becomes electrochemically more basic than the aluminum tubular body and the fin material. Thus, the fillet part causes preferential corrosion. The test results were further studied, and as a result, the inventors of the present invention have found that diffusion of Zn into the fillet part occurs noticeably, when the amount of Zn deposition of the coating layer is large, and when the amount of Zn that is coated by thermal spraying is reduced, improvement of corrosion resistance can be obtained to a certain amount, but simply reducing the amount of deposition of Zn does not necessarily enable excellent corrosion resistance to be obtained. Thus, the inventors of the present invention have found that, when a predetermined amount of Cu is added to the filler material, and the size of precipitates in the core alloy is controlled, the electric potential of the fillet part more basic in the electric potential is made nobler (higher) due to concentration of Zn is made higher, thereby for preventing peeling-off of the fin, and further buckling of the fin at the time of braze-heating can also be improved.

The present invention was achieved based on the findings described above, and the present invention is contemplated for providing an aluminum alloy brazing fin material for automotive heat exchangers, which uses aluminum tubular bodies with a Zn coating layer formed thereon, and which is not chromate-treated. Further, the present invention is contemplated for providing an aluminum alloy brazing fin material for heat exchangers, which is excellent in formability, which can suppress occurrence of pitting corrosion in the aluminum tubular body under a severely corrosive environment, which is excellent in corrosion resistance of the fillet part, and which can prevent peeling-off of the fin from the aluminum tubular bodies.

### SOLUTION TO PROBLEM

According to the present invention, which is defined by the appended claims, there is provided the following means:
A first embodiment is an aluminum alloy brazing sheet for heat exchangers, the brazing sheet having, as a core alloy, an Al alloy containing Mn 0.6 to 2.0 mass% (hereinafter, simply described as %), Fe 0.05 to 0.5%, Si 0.4 to 0.9%, and Zn 0.02 to 4.0%, with the balance being Al and unavoidable impurities; and as a skin alloy disposed on each surface of the core alloy, an Al alloy containing Si 6.0 to 13.0%, Fe 0.05 to 0.80%, and Cu 0.05 to 0.45%, with the balance being Al and unavoidable impurities, wherein a ratio A/B of a number density A (particles/mm²) of Al-Mn-Fe-based or Al-Mn-Si-based precipitates having a particle size of 0.1 µm or more but less than 3.0 µm, and a number density B (particles/mm²) of precipitates having a particle size of 3.0 µm or more in the core alloy, satisfies a relationship: 50 ≤ A/B ≤ 500, and wherein an average grain size of the core alloy in a longitudinal cross-section of a fin after braze-heating is 100 µm or more.

A second embodiment is a brazing sheet for heat exchangers, the brazing sheet having, as the core alloy, an Al alloy further containing at least one of Zr 0.05 to 0.3%, Cr 0.05 to 0.3%, and Ti 0.05 to 0.3%, in addition to essential alloying elements of the core alloy composition of the first embodiment, with the balance being Al and unavoidable impurities; and as the skin alloy disposed on each surface of this core alloy, the Al alloy containing Si 6.0 to 13.0%, Fe 0.05 to 0.80%, and Cu 0.05 to 0.45%, with the balance being Al and unavoidable impurities, wherein the ratio A/B of the number density A (particles/mm²) of Al-Mn-Fe or Al-Mn-Si-based precipitates having a particle size of 0.1 µm or more but less than 3.0 µm, and the number density B (particles/mm²) of precipitates having a particle size of 3.0 µm or more in the core alloy, satisfies the relationship: 50 ≤ A/B ≤ 500, and wherein the average grain size of the core alloy in the longitudinal cross-section of the fin after braze-heating is 100 µm or more.

A third embodiment is a method of producing the aluminum alloy brazing sheet for heat exchangers, the brazing sheet satisfying the alloy composition of the first or second embodiment, the method containing the steps of: cladding the skin alloy such that a clad ratio of the skin alloy is 5% to 15% on one surface, to form an Al alloy clad material; heating the Al alloy clad material at 420°C to 500°C, followed by subjecting the resultant Al alloy clad material to hot rolling, cold rolling, and intermediate annealing; and performing final cold-rolling of the resultant Al alloy clad material, to produce the brazing sheet with the sheet thickness of 40 µm to 100 µm.

### ADVANTAGEOUS EFFECTS OF INVENTION

According to the present invention, provided is an aluminum alloy brazing sheet for heat exchangers, which is excellent in buckling property at the time of braze-heating, which is capable of preventing preferential corrosion of fillets, and which is subjected to making the brazing sheet thinner to a thickness, for example, of 40 to 100 µm. When this aluminum alloy brazing sheet is used as a fin material, even if the resultant heat exchanger is placed in a corrosive environment, the problem of a fin being peeled-off or separated from the aluminum tubular bodies is solved, and the sacrificial anode effect of the fin or the effect of preventing corrosion of the aluminum tubular body surfaces is also sufficiently exhibited, so that lengthening of the service life of the heat exchanger can be achieved.

### BRIEF DESCRIPTION OF DRAWINGS

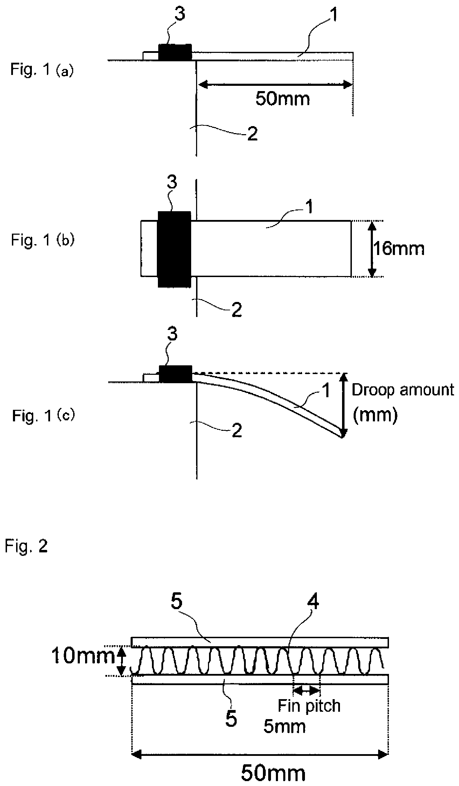

{Fig. 1}
   Figs. 1(a) to 1(c) each are an explanatory view for a method for testing the resistance to high-temperature buckling property of a fin material.
{Fig. 2}
   Fig. 2 is an explanatory view for the pitting corrosion resistance test for the fin material.
{Fig. 3}
   Fig. 3 is an explanatory view for the breaking load test for the fin material.

### DESCRIPTION OF EMBODIMENTS

Hereinafter, the details of the present invention, as well as other features and advantages will be described based on the embodiments of the present invention, with appropriately referring to the attached drawings.

First, the effects of the various alloying elements in the aluminum alloy composition to be used in the core alloy of the fin material of the present invention, will be explained.

The core alloy contains Mn 0.6% to 2.0%. Mn has a function of enhancing the mechanical strength of the alloy, and enhancing the resistance to high-temperature buckling property on the occasion of high-temperature heating at the time of brazing. If the amount of Mn is too small, the effect becomes insufficient. Further, if the amount of Mn is too large, AI-Mn-Fe-based or Al-Mn-Si-based coarse compounds are formed, and a uniform metallographic microstructure state may not be obtained, which is not preferable. Also, when the amount of Mn is too large, huge crystallized products are apt to produce, and formability is deteriorated. The Mn content is more preferably 0.8% to 1.6%.

The core alloy contains Fe 0.05% to 0.5%. Fe enhances the mechanical strength of the fin material in co-presence with Mn. If the amount of Fe is too small, the effect cannot be sufficiently obtained. On the contrary, if the amount of Fe is too large, a large amount of Al-Fe-based compounds are occurred, to deteriorate corrosion resistance. Also, if the amount of Fe is too large, since the amount of crystallized products is increased, and the crystallized products work as nucleation sites for recrystallization, and recrystallized grains are made finer, to deteriorate the resistance to high-temperature buckling property and the corrosion resistance at grain boundary. Thus, the Fe content is more preferably 0.05% to 0.3%.

The core alloy contains Si 0.4% to 0.9%. Si precipitates Al-Mn-Si-based compounds, to enhance the mechanical strength. If the amount of Si is too small, the effect cannot be sufficiently obtained. On the contrary, if the amount of Si is too large, the melting point is lowered, to deteriorate the high-temperature buckling property at the time of braze-heating. The Si content is more preferably 0.4% to 0.7%.

The core alloy contains Zn 0.02% to 4.0%. Zn has an effect of making the electric potential of the fin material more basic, to prevent pitting corrosion of a working fluid passage of tubes and the like by means of a sacrificial anode effect. If the amount of Zn is too small, the effect cannot be sufficiently obtained. On the contrary, if the amount of Zn is too large, self-corrosiveness is made too much higher. The Zn content is more preferably 0.5 to 2.5%.

Zr and Cr in the core alloy enhance the mechanical strength and the resistance to high-temperature buckling property. Those elements are such that if the amount is too small, the effects cannot be sufficiently obtained. On the contrary, if the amount is too large, coarse crystallized products are occurred, to deteriorate rolling workability. Thus, the contents of Zr and Cr are set to 0.05% to 0.3%, and more preferably 0.05% to 0.2%.

Ti in the core alloy forms fine intermetallic compounds, to enhance the mechanical strength and the resistance to high-temperature buckling property of the alloy. If the amount of Ti is too small, the effects cannot be obtained. On the contrary, if the amount is too large, coarse intermetallic compounds are occurred in the ingot, for thereby occurring cracks at the time of rolling. Thus, the content of Ti is set to 0.05% to 0.3%, and more preferably 0.05% to 0.2%.

In regard to the core alloy of the present invention, if the amounts of other unavoidable impurity elements (Mg, Ca, Ni, V, and the like) are respectively 0.05% or less and the total amount is 0.15% or less, the intended effects of the present invention are not impaired.

Next, the effects of the various alloying elements in the aluminum alloy composition to be used in the skin alloy (the filler alloy) of the brazing sheet of the present invention, will be explained.

The skin alloy contains Si 6.0% to 13.0%. Si has an effect of lowering the melting point, to enhance the fluidity of molten solder and the joinability of fins to tubes or side plates. If the content of Si is too small, the effects cannot be sufficiently obtained. On the contrary, if the content of Si is too large, the melting point of the skin alloy is made too much higher, and the solder becomes not easily meltable, for thereby deteriorating joinability of the fins to the tubes or side plates. The Si content in the skin alloy is more preferably 7.0% to 11.0%.

The skin alloy contains Cu 0.05% to 0.45%. Cu has an effect of making the electric potential nobler, and thus, Cu prevents the electric potential of fillets from being excessively made more basic due to diffused and concentrated Zn. If the content of Cu is too small, the electric potential of fillets cannot be prevented from being excessively made more basic due to Zn. On the contrary, if the content of Cu is too large, the electric potential of fillets is made nobler excessively, the difference in the electric potential between the fillets and the fin having a relatively lower electric potential is increased, to occur excessive corrosion of the fin. The Cu content in the skin alloy is more preferably 0.05% to 0.25%, and further preferably 0.05% to 0.15%.

The skin alloy contains Fe 0.05% to 0.80%. Fe has an effect of increasing the fluidity of solder. If the amount of Fe is too small, the effect cannot be sufficiently obtained. On the contrary, if the amount of Fe is too large, a large amount of Al-Fe-based compounds are occurred, to deteriorate corrosion resistance. The Fe content is more preferably 0.1% to 0.5%.

The skin alloy is an Al alloy, with the balance being Al and unavoidable impurities, and the unavoidable impurity elements do not affect the effects of the present invention if the content thereof is 0.01% or less. Further, Na and Sr have a function of making Si particles in the skin alloy finer and suppressing erosion of Si particles in the core alloy. Thus, Na or Sr may be added in an amount of 0.0001% to 0.1% to the skin alloy.

The clad ratio of the skin alloy is set to 5% to 15%. If the clad ratio is too low, the solder of the clad fin is insufficient, and there is a risk that joinability between the skin alloy and the tube may be deteriorated. Further, if the clad ratio is too high, the amount of molten solder increases, and the core alloy is apt to melt. Thus, the clad ratio of the skin alloy with respect to the core alloy is preferably 5% to 15%, and more preferably 8% to 12%, for one surface.

The sheet thickness of the brazing sheet is preferably 40 to 100 µm. If this sheet thickness is too thin, the core alloy is apt to melt due to molten solder. Further, the mechanical strength becomes insufficient, and the resistance to high-temperature buckling property is conspicuously deteriorated.

Next, the method of producing the aluminum alloy brazing sheet for heat exchangers of the present invention will be explained.

Conventional tube materials and fin materials for heat exchangers are subjected to a homogenization treatment of the composition of the core alloy after casting.

On the contrary, in the method of the present invention, homogenization of the composition can be attained only by cladding the core alloy with the skin alloy, and subjecting the resultant clad material to clad-heating (joint-heating) without performing any homogenization treatment. Thus, the required characteristics can be sufficiently satisfied.

The core alloy and the skin alloy are heated to a temperature of 420°C to 500°C without subjecting the core alloy to any homogenization treatment, and then hot rolling is performed. When the heating temperature is set to 420°C to 500°C, Al-Mn-Fe-based or Al-Mn-Si-based intermetallic compounds are precipitated, thereby for enhancing the mechanical strength, and the resistance to high-temperature buckling property of the fin material that has been making the fin material thinner can be enhanced. At a temperature of lower than 420°C, the deformation resistance of hot rolling increases, and rolling is made difficult. Further, if the heating temperature is higher than 500°C, intermetallic compounds (precipitates) are precipitated in excess, and thus the resistance to high-temperature buckling property is deteriorated. Further, due to the effect of crystallized products, recrystallized grains are made finer, and corrosion of grains proceeds, to deteriorate the corrosion resistance. Further, the heating retention time is preferably 1 hour to 10 hours.

After completion of the hot rolling, the cold rolling is carried out, and then the intermediate annealing is carried out. The intermediate annealing is preferably carried out by heating for 0.5 hours to 10 hours at 300°C or higher, at which solid-solubilized elements, such as Mn, Cu, and Si, can be easily precipitated (the upper limit is preferably 450°C or lower). Conventionally, in the process of producing a fin material that exhibits a fibrous microstructure, as described in Patent Literature 1, a method is employed in which the annealing temperature at the time of production of the fin material is set to a temperature lower than the recrystallization temperature. In a preferred process of producing the fin material according to the present invention, recrystallization is completely achieved by the intermediate annealing immediately before the final cold-rolling, and a state is brought in which the recrystallized grains have been grown as much as possible, specifically a state in which only several grains are present in the thickness direction of the longitudinal cross-section of the fin, and thereafter, a skin-pass cold-rolling is carried out. The growth of recrystallized grains at the time of the intermediate annealing can be achieved by appropriately selecting: the conditions for homogenization (homogenization of a clad material of the core alloy and the skin alloy) or preliminary heating before the hot rolling; the conditions for the hot rolling; the rolling reduction ratio of the cold rolling before the intermediate annealing; and the conditions for the intermediate annealing.

As described above, the final cold-rolling is performed after the intermediate annealing, to produce a manufactured product; and this cold rolling reduction ratio (the final cold-rolling reduction ratio) is set to 20% to 70%. If this cold rolling reduction ratio is too low, a fin material cannot be obtained, which has a mechanical strength that satisfies the requirement for making the fin material thinner. On the other hand, if the cold rolling reduction ratio is too high, the amount of working is too large, and thus nucleation of recrystallization occurs even from the deformed zone. Thus, the resultant recrystallized grains become finer, Si undergoes grain boundary diffusion from the skin alloy, and the high-temperature buckling property and corrosion resistance at the grain boundaries are deteriorated. Thus, the cold rolling reduction ratio after the intermediate annealing is preferably 20% to 70%.

In regard to the brazing sheet produced in the process described above, the ratio A/B of the number density A (particles/mm²) of Al-Mn-Fe-based or Al-Mn-Si-based fine precipitates having a particle size of 0.1 µm or more but less than 3.0 µm in the core alloy, and the number density B (particles/mm²) of coarse precipitates having a particle size of 3.0 µm or more in the core alloy, must satisfy the relationship: 50 ≤ A/B ≤ 500.

The ratio 50 ≤ A/B ≤ 500 can be attained by clad-heating the core alloy and the skin alloy at a temperature of 420°C to 500°C before the hot rolling, without performing any homogenization treatment of the core alloy, to attain a function of enhancing the resistance to high-temperature buckling property on the occasion of high-temperature heating at the time of brazing. If the ratio A/B is too small, the amount of coarse precipitates having a particle size of 3.0 µm or more is large relative to the amount of fine precipitates having a particle size of 0.1 µm or more but less than 3.0 µm, and thus sufficient mechanical strength cannot be obtained, to deteriorate the resistance to high-temperature buckling property. Alternatively, the number density B of coarse precipitates having a particle size of 3.0 µm or more is high, to deteriorate formability. If the ratio A/B is too large, recrystallized grains are made finer, corrosion at grain boundaries proceeds, to deteriorate corrosion resistance and resistance to high-temperature buckling property. Thus, the relationship is such that: 50 ≤ A/B ≤ 500, and more preferably 200 ≤ A/B ≤ 350.

Lastly, the heat exchanger according to the present invention will be explained.

The heat exchanger according to the present invention is produced by combining the fin material formed as described above, with tubes and other members, and brazing these materials.

Regarding the brazing method, a Nocolok brazing method of using a flux(es) is preferably employed. The temperature for the brazing operation is preferably in the range of 590°C to 610°C, but the temperature is not intended to be limited to this temperature range. In the brazing operation, the time required for the heating step and cooling step, in which the temperature rises from 400°C and reaches the brazing temperature, and then solder solidification is completed, is not particularly limited, but 7 to 40 minutes is preferable. However, particularly for a short time treatment, when the speed of temperature rising in the heating step is set to 150°C/min or faster, the core alloy grains of the fin after brazing become finer, and the fin strength after corrosion is rather deteriorated, which is not preferable.

Further, the phrase "the average grain size of the core alloy after braze-heating of the fin is set to 100 µm or more" as defined in the present invention, means the average grain size of the core alloy obtainable, by a Nocolok brazing method of using the flux, when the core alloy is heated to 600°C at a speed of temperature rising of 40°C/min, maintained for 3 minutes, and then cooled to 50°C or lower.

The average grain size referred to as in the present invention means a value calculated according to the Hein straight line cutting method as stipulated in ASTM.

The crystalline microstructure of the fin that is brazed as above, has the following characteristics.

In the longitudinal cross-section of the brazed fin, the average length of recrystallized grains of the core alloy is set to 100 µm or more, in order to secure the mechanical strength after fin corrosion. The fin corrosion mainly proceeds as a result of grain boundary corrosion. If the average length of the recrystallized grains is less than 100 µm, since the number of grain boundaries existing in the entire fin increases, corrosion easily occurs from the fin surfaces, and the lowering of mechanical strength after corrosion becomes conspicuous, which is inappropriate.

The average length of the core alloy recrystallized grains after brazing is defined as the value obtained by observing a longitudinal cross-section of a fin with an optical microscope according to the Barker's method that is generally carried out for observation of grains of aluminum alloys, and dividing the field of observed length of 10,000 µm by the number of core alloy recrystallized grains present in that range. Herein, the longitudinal cross-section of a fin means a cross-section along the longitudinal direction of the fin, which is defined as the rolling direction used when a brazing sheet is formed.

### EXAMPLES

The present invention will be described in more detail based on examples given below, but the invention is not meant to be limited by these.

Table 1 shows alloy compositions of core alloys as used in the Examples. An ingot having a size of 258 mm × 790 mm × 1,600 mm was produced using an alloy having any one composition of A1 to A23, and the ingot was subjected to scalping. Then, each surface of the core alloy was clad with a skin alloy having any one alloy composition of B1 to B9, as shown in Table 2, at a clad ratio of 4% to 16%, to prepare clad materials of test materials No. 1 to 42 as shown in Table 3. Then, clad-heating was carried out for 3 hours at 410°C to 520°C, and then hot rolling was carried out to 3.5 mm. Cold rolling was carried out to a predetermined sheet thickness, followed by intermediate annealing at 370°C for 2 hours, and cold rolling. Thus, a brazing sheet with sheet thickness 60 µm, and a brazing sheet with sheet thickness of 30 µm as a reference, were produced.

### {Table 1}

**Table 1**

| | Alloy No. | Alloy composition (mass%) | | | | | | | | |
|---|---|---|---|---|---|---|---|---|---|---|
| | | Mn | Si | Fe | Zn | Cu | Zr | Cr | Ti | Al |
| Core alloy (Examples according to this invention) | A1 | 0.6 | 0.4 | 0.05 | 0.02 | - | - | | - | Balance |
| | A2 | 0.8 | 0.6 | 0.3 | 0.5 | - | - | | - | Balance |
| | A3 | 1.1 | 0.7 | 0.3 | 1.0 | - | - | | - | Balance |
| | A4 | 1.6 | 0.9 | 0.5 | 2.5 | - | - | | - | Balance |
| | A5 | 2.0 | 0.5 | 0.05 | 4.0 | - | - | | - | Balance |
| | A6 | 0.6 | 0.5 | 0.3 | 2.0 | - | 0.05 | 0.1 | - | Balance |
| | A7 | 1.2 | 0.5 | 0.2 | 1.2 | - | 0.1 | - | 0.05 | Balance |
| | A8 | 0.6 | 0.4 | 0.2 | 0.05 | - | 0.2 | 0.05 | 0.1 | Balance |
| | A9 | 1.5 | 0.5 | 0.4 | 2.5 | - | 0.3 | 0.05 | - | Balance |
| | A10 | 0.8 | 0.6 | 0.3 | 1.5 | - | 0.1 | 0.3 | - | Balance |
| | A11 | 1.1 | 0.5 | 0.3 | 1.5 | - | 0.05 | - | 0.2 | Balance |
| | A12 | 1.6 | 0.7 | 0.2 | 1.4 | - | - | 0.2 | - | Balance |
| | A13 | 1.5 | 0.5 | 0.4 | 1.6 | - | - | - | 0.3 | Balance |
| Comparative example | A14 | 0.5 | 0.5 | 0.3 | 1.7 | - | - | - | - | Balance |
| | A15 | 2.1 | 0.5 | 0.3 | 1.7 | - | - | - | - | Balance |
| | A16 | 1.0 | 0.3 | 0.3 | 1.5 | - | - | - | - | Balance |
| | A17 | 1.0 | 1.0 | 0.3 | 1.5 | - | - | - | - | Balance |
| | A18 | 1.0 | 0.5 | 0.02 | 1.5 | - | - | - | - | Balance |
| | A19 | 1.0 | 0.5 | 0.6 | 1.5 | - | - | - | - | Balance |
| | A20 | 1.0 | 0.5 | 0.3 | 4.5 | - | - | - | - | Balance |
| | A21 | 1.0 | 0.5 | 0.3 | 1.5 | - | 0.35 | - | - | Balance |
| | A22 | 1.0 | 0.5 | 0.3 | 1.5 | - | - | 0.35 | - | Balance |
| | A23 | 1.0 | 0.5 | 0.3 | 1.5 | - | - | - | 0.35 | Balance |

### {Table 2}

**Table 2**

| | Alloy No. | Alloy composition (mass%) | | | |
|---|---|---|---|---|---|
| | | Si | Fe | Cu | Al |
| Skin alloy (Examples according to this invention) | B1 | 6 | 0.05 | 0.05 | Balance |
| | B2 | 10 | 0.3 | 0.15 | Balance |
| | B3 | 13 | 0.8 | 0.45 | Balance |
| Comparative example | B4 | 5 | 0.3 | 0.15 | Balance |
| | B5 | 14 | 0.3 | 0.15 | Balance |
| | B6 | 10 | 0.02 | 0.15 | Balance |
| | B7 | 10 | 0.9 | 0.15 | Balance |
| | B8 | 10 | 0.3 | 0.03 | Balance |
| | B9 | 10 | 0.3 | 0.5 | Balance |

### {Table 3}

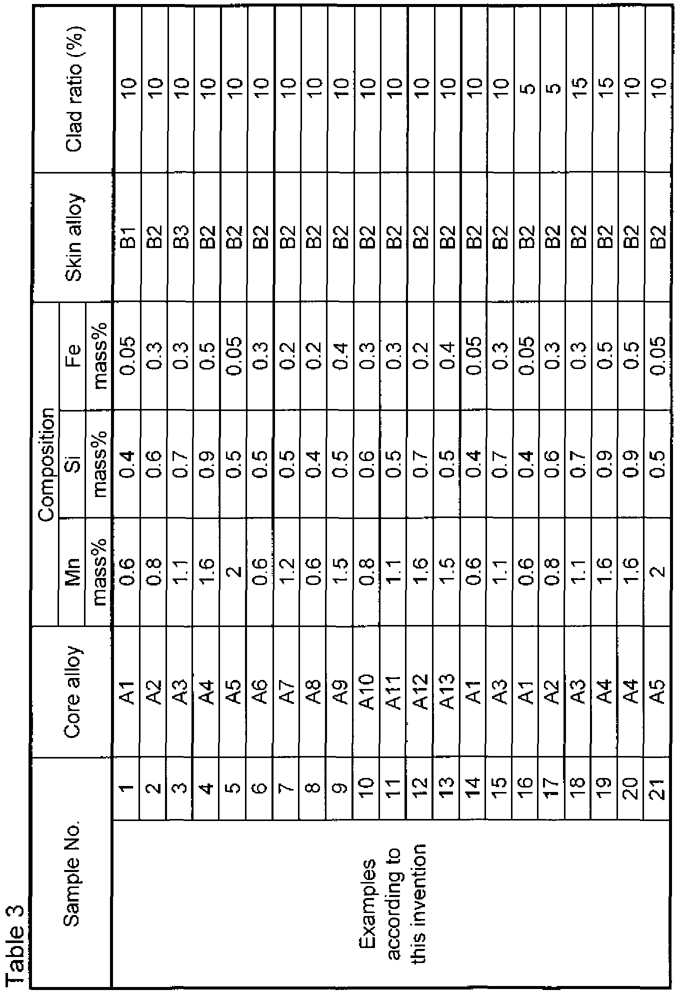

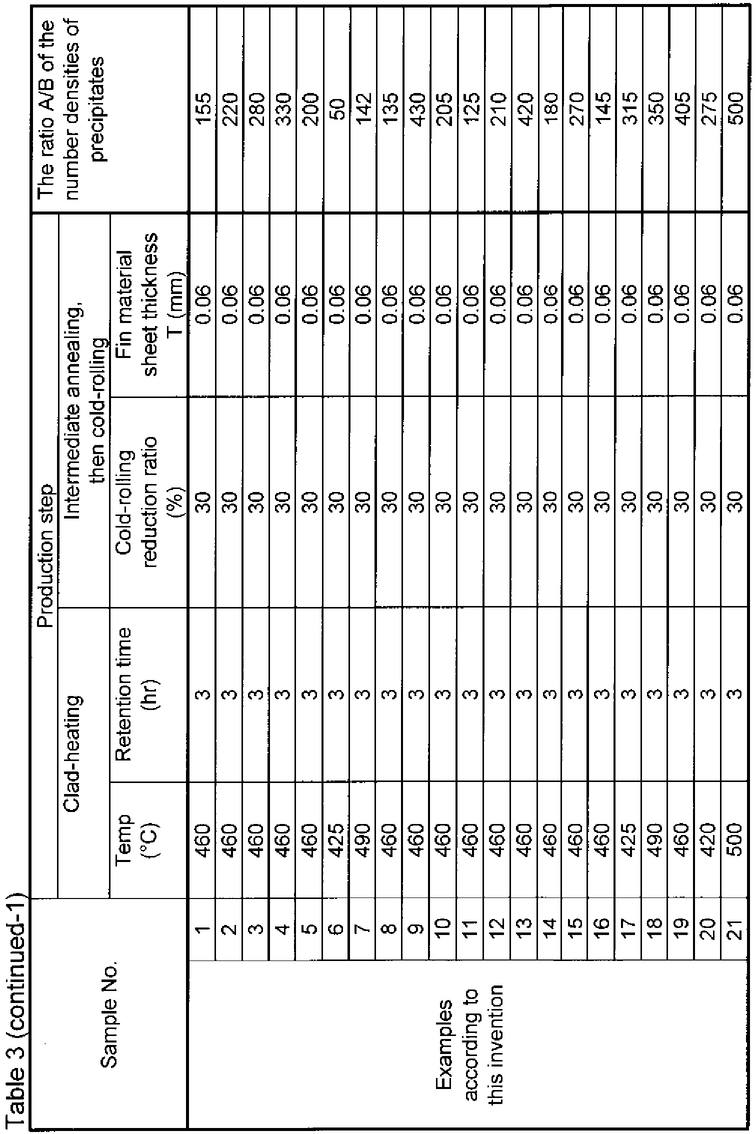

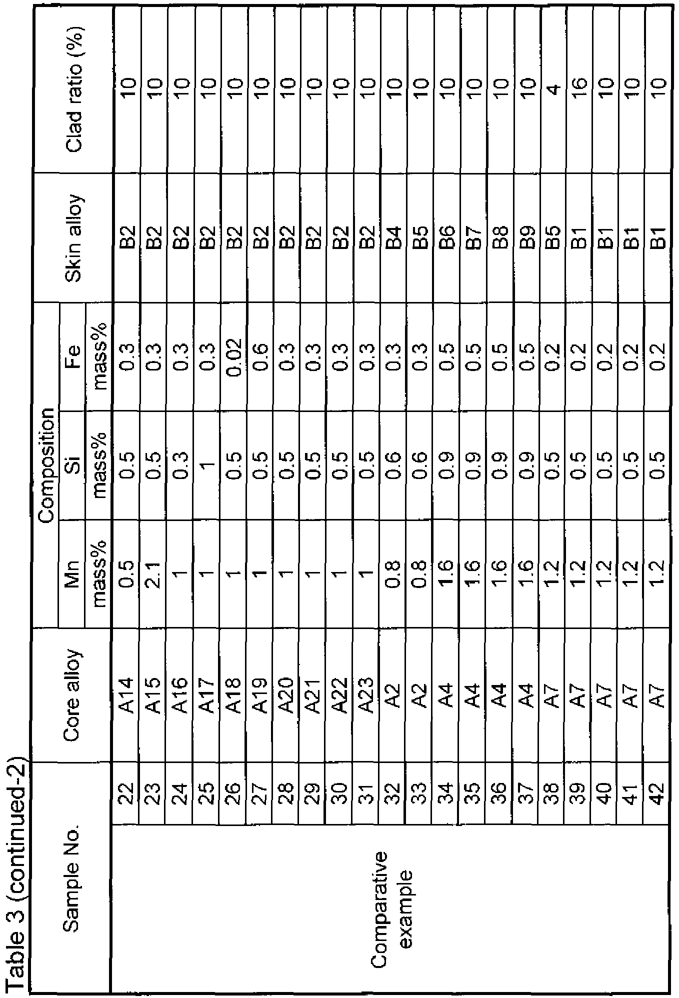

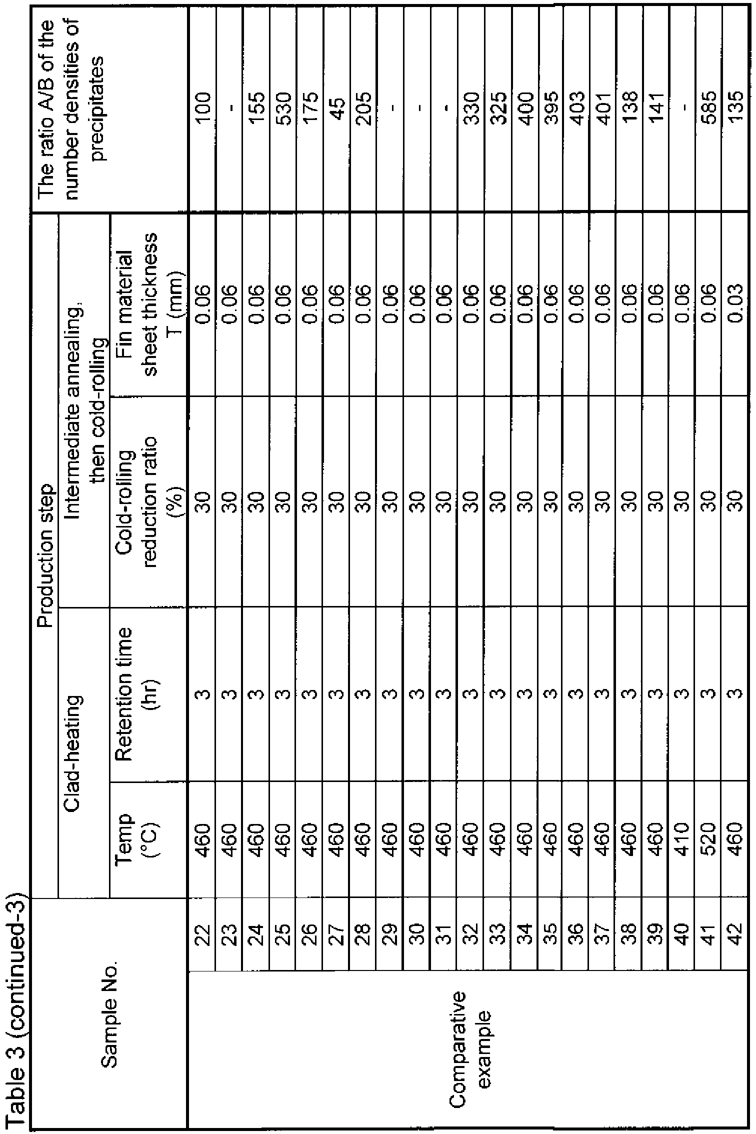

Tests for the tensile strength, resistance to high-temperature buckling property, and corrosion resistance of the fin materials obtained as described above were carried out, and the results are presented in Table 4.

### (1) Tensile strength after braze-heating (TS)

The tensile test after braze-heating was carried out using a specimen that was worked to the size of JIS No. 5.

A case having a tensile strength after braze-heating of 120 MPa or more was rated as good "A", and a case having a tensile strength of less than 120 MPa was rated as poor "D".

### (2) Resistance to high-temperature buckling property (droop amount)

A specimen 1 with width 16 mm and length 60 mm was produced from each of the test materials No. 1 to 42, and each of those was heated at 600°C for 3 minutes in a nitrogen atmosphere, while a protrusion part which measured 0.06^{t} × 16^{w} × 50^{l} (mm) was retained with a cantilever, using a fixing tool 3 on a platform 2 as shown in Fig. 1(a). Fig. 1(a) is a schematic front view before heating, and Fig. 1(b) is a schematic plan view in the state of Fig. 1(a). Fig. 1(c) is a front view schematically showing the drooped state after the heating. A droop amount of 20 mm or less after the heating as shown in Fig. 1(c) was judged to pass the test.

### (3) Fin joinability

As shown in Fig. 2, a fin material 4 was subjected to corrugation working, and then an A3003 sheet 5 which measured 0.5^{t} × 16^{w} × 70^{l} (mm) was brazed on each side of the fin material 4, via a non-corrosive flux brazing method. Whether a solder pool (fillet) was formed at the joint of the fin and the sheet 5, or not, was taken as a judgement criterion.

### (4) Characteristics of fin material after SWAAT test (corrosion resistance)

A brazing sheet was subjected to corrugation forming to have a fin height of 10 mm, a fin pitch of 5 mm, and the fin ridge number of 11 each for the upper part and the lower part, making 22 ridges in total, as shown in Fig. 2, to produce a fin.

On the other hand, on the surface of a tube base material formed from an Al-0.4% Cu alloy with width 16 mm and thickness 2 mm, Zn was thermally sprayed in an amount of thermal spraying of 6 to 8 g/m², to produce two tubes. Thus, a mini-core as shown in Fig. 2 was produced.

The mini-core produced as above was brazed, using a usual NB brazing method, to produce a brazing sample simulating a heat exchanger. The heating condition for brazing was set to 600°C and for the retention time 3 minutes. The total time was set to 18 minutes, for the time for temperature rising from 400°C to the brazing temperature, the retention time at 600°C, and the cooling time to the solidification temperature. At that time, the average sped of temperature rising from 400°C to 550°C was about 40°C/min.

After brazing, first, the fin joining ratio was evaluated as follows. The fin having the ridge number of 22 in total of the upper and lower parts was joined to the tubes at the ridge parts. Then, these joints were mechanically detached, a joint having a joining mark was judged as satisfactory joint, and the ratio of the number of ridges exhibiting such a satisfactory joint to the total number of ridges (22 ridges) was designated as the fin joining ratio. Then, a SWAAT test was carried out as a corrosion test. In the SWAAT test, a cycle of spraying artificial seawater at pH 2.8 to 3.0 at 49°C for 30 minutes, and then exposing the object to 49°C and a relative humidity of 98% or higher for 90 minutes, was repeated for 360 times (total 720 hours).

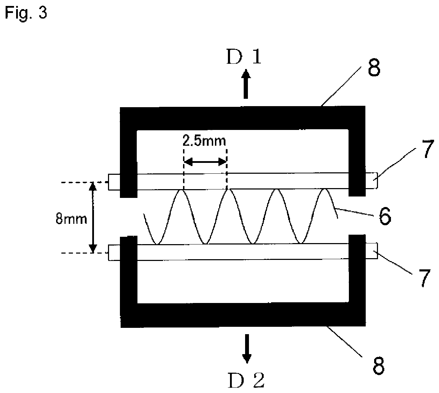

After the corrosion, first, the fin joining ratio was measured in the same manner as in the case of the joining ratio after brazing. A case having a joining ratio of 90% or higher was rated as good "A", and a case having a joining ratio of less than 90% was rated as poor "D". Then, as shown in Fig. 3, the fin breaking load was measured by pulling the upper tube 7 in the direction indicated by D1, and the lower tube 7 in the direction indicated by D2, which was an opposite direction of D1, using a pulling tool 8. The fin breaking load has a higher value when the fin 6 and the joints are not damaged by corrosion, and if any part has been damaged by conspicuous corrosion, the fin breaking load has a low value.

A case having a fin load after corrosion of 50 N or higher was rated as good "A", and a case having a fin load of less than 50 N was rated as poor "D".

The characteristics of the fin after the brazing and the results of the corrosion test after the brazing are presented in Table 4.

It was decided that when fin buckling occurred, the evaluation was to be ended without performing the SWAAT test.

### (5) Number density of Al-Mn-Fe-based or Al-Mn-Si-based metal compounds

Images of a cross-section of the core alloy of a plain sheet before braze-heating were taken with a scanning electron microscope (JSM-6460LA) manufactured by JEOL, Ltd. with a magnification of × 1,000 folds, and the number of AI-Mn-Fe-based or Al-Mn-Si-based metal compound particles having a circle-equivalent diameter (the diameter of a circle having an area equivalent to the projected area of an individual particle) of 0.1 µm or more was counted with an image analysis software ("A ZO" KUN) manufactured by Asahi Kasei Engineering Corp., to measure the number density. The results are presented in Table 3 as " the ratio A/B of the number density A (particles/mm²) of fine precipitates having a particle size of 0.1 µm or more but less than 3.0 µm and the number density B (particles/mm²) of coarse precipitates having a particle size of 3.0 µm or more".

### (6) Average grain size in longitudinal direction

The average grain size was calculated according to the Hein straight line cutting method as stipulated in ASTM.

### {Table 4}

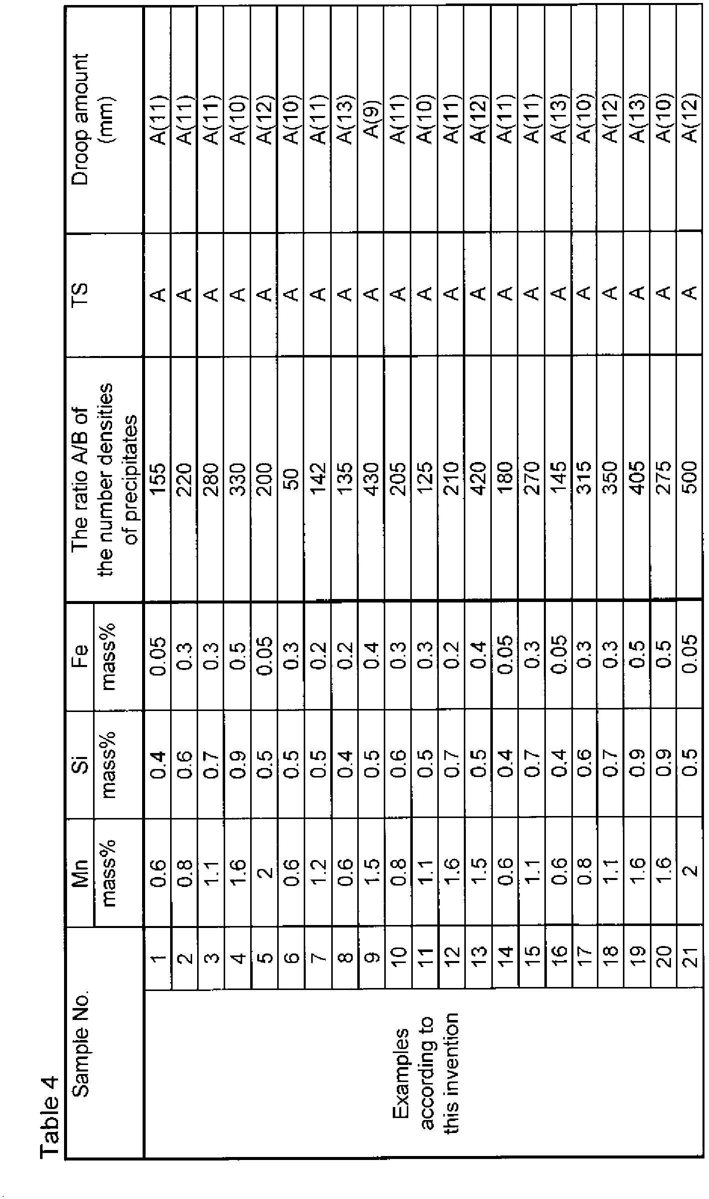

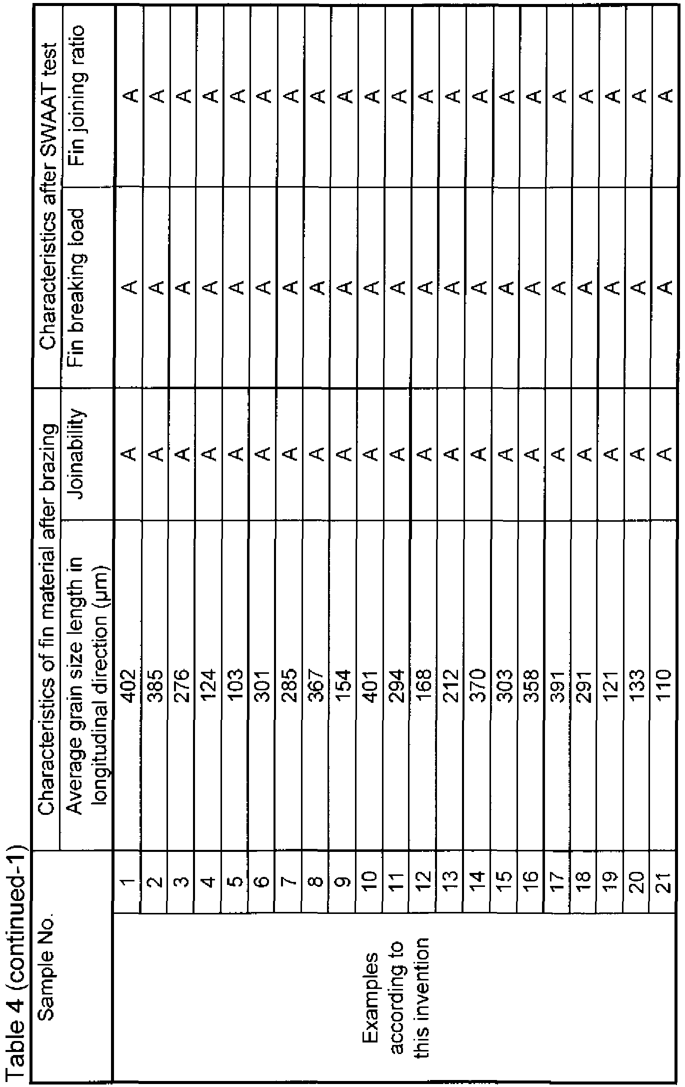

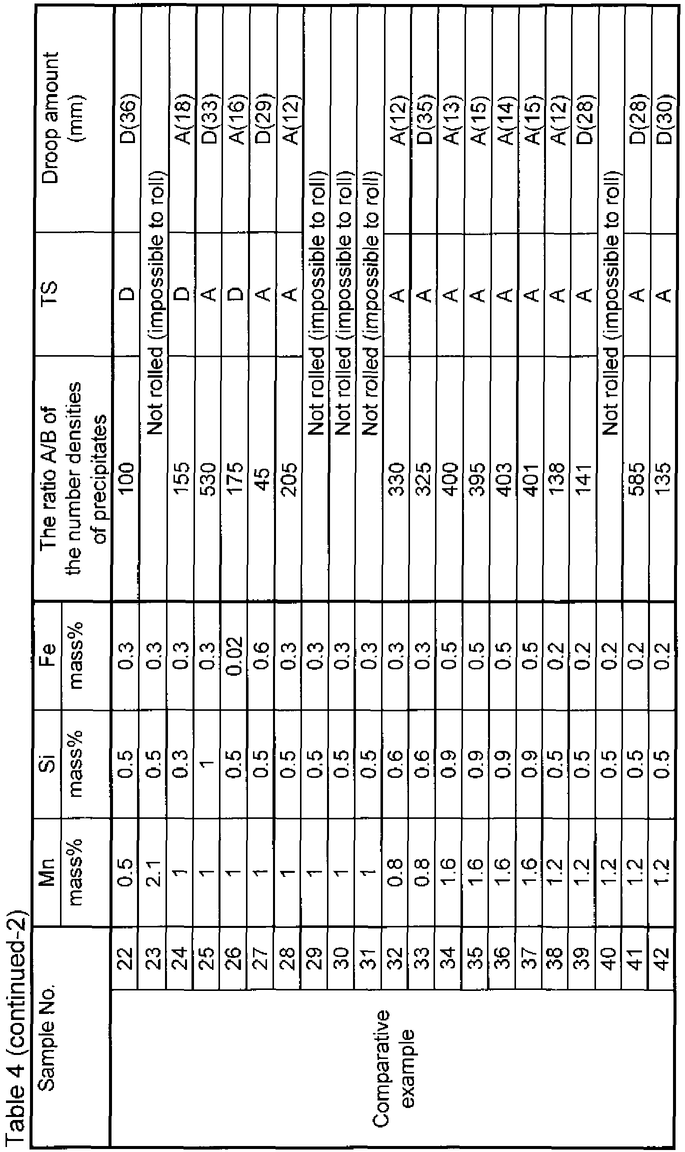

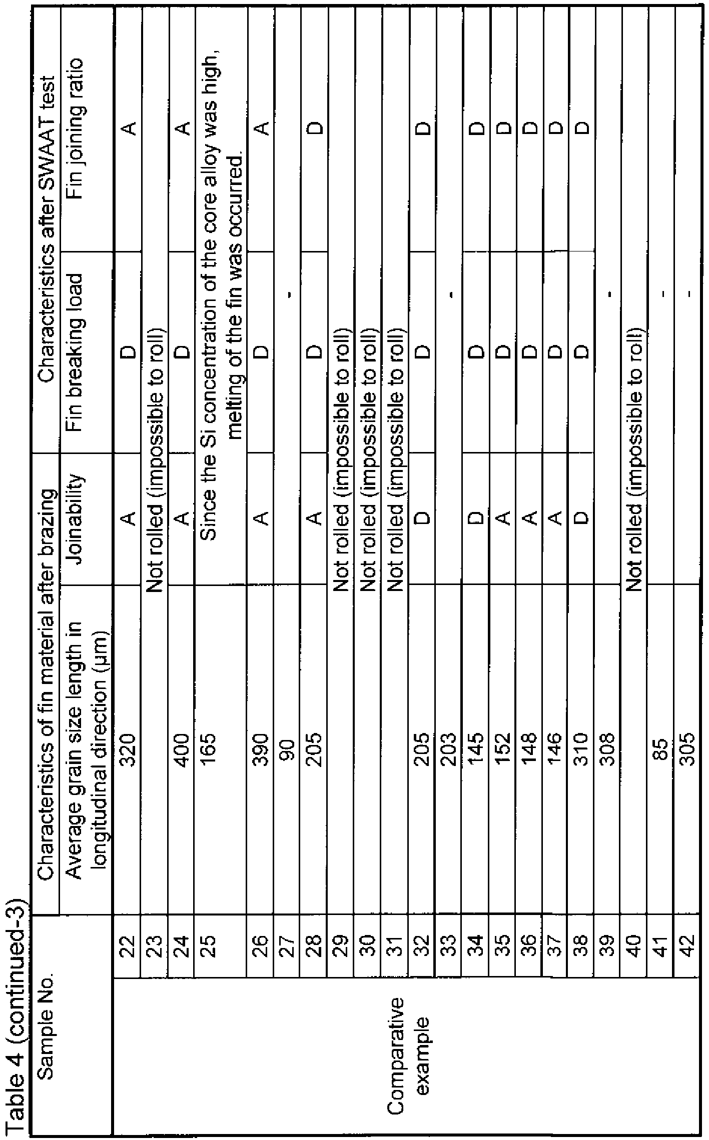

It can be seen from the results of Table 4 that according to the Examples according to the present invention, even in the materials of the present invention that have been subjected to making the brazing sheet thinner, sufficient resistance to high-temperature buckling property and sufficient resistance to fin-detaching property after the corrosion test were exhibited, as compared with the conventional thick materials, and that making the fin material further thinner is made possible.

Further, it is understood that according to the method of the present invention, an excellent aluminum thin sheet for a fin can be produced, which fin is preferable for non-corrosive flux brazing and carrier gas brazing.

On the contrary, the Comparative Examples have problems such as described below.

In Test Material No. 22, the Mn content of the core alloy was too small, the mechanical strength was low, the droop amount in the resistance to high-temperature buckling property test was as large as more than 20 mm, and buckling of the fin was recognized. Test Material No. 23 was not possible to subject to the predetermined rolling, since the Mn content of the core alloy was too large.

In Test Material No. 24, the Si content of the core alloy was too small, the mechanical strength was low, and the fin breaking load after corrosion was also low. In Test Material No. 25, the Si content of the core alloy was too large, and the ratio A/B of the number density of precipitates was too large, so that the droop amount was large and buckling of the fin occurred. Also, melting of the fin occurred.

In Test Material No. 26, the Fe content of the core alloy was too small, the mechanical strength was low, and the fin breaking load after corrosion was also low. In Test Material No. 27, the Fe content of the core alloy was too large, the ratio A/B of the number density of precipitates was too large, and the average grain size was too small, so that the droop amount was large and buckling of the fin occurred.

In Test Material No. 28, the Zn content of the core alloy was too large, the corrosion speed was become high, and the characteristics after the SWAAT test were poor.

In test Material No. 29, the Zr content of the core alloy was too large, in test Material No. 30, the Cr content of the core alloy was too large, and in test Material No. 31, the Ti content of the core alloy was too large, they each were not possible to subject to the rolling.

In Test Material No. 32, the Si content of the skin alloy was too small, and joinability of the fin after the brazing and the characteristics after the SWAAT test each were poor.

In Test Material No. 33, the Si content of the skin alloy was too large, and the droop amount was large and buckling of the fin occurred.

In Test Material No. 34, the Fe content of the skin alloy was too small, and joinability of the fin after the brazing and the characteristics after the SWAAT test each were poor. In Test Material No. 35, the Fe content of the skin alloy was too large, and the characteristics after the SWAAT test were poor.

In test Material No. 36, the Cu content of the core alloy was too large, and in test Material No. 37, the Cu content of the core alloy was too large, they each were poor in the characteristics after the SWAAT test.

In Test Material No. 38, the Si content of the skin alloy was too large, the clad ratio was too low, and joinability of the fin after brazing and the characteristics after the SWAAT test each were poor.

In Test Material No. 39, the clad ratio was too high, and the droop amount was large and buckling of the fin occurred.

In Test Material No. 40, the clad-heating temperature was too low, and it was not possible to subject to the rolling.

In Test Material No. 41, the clad-heating temperature was too high, the ratio A/B of the number density of precipitates was too large, and the average grain size was too small, so that the droop amount was large and buckling of the fin occurred.

Further, the test materials of the Examples according to the present Invention having a sheet thickness of 60 µm exhibited the characteristics according to the present invention. However, in Test Material No. 42 that was too thin with a sheet thickness of 30 µm, the droop amount after the braze-heating was large and buckling of the fin occurred.

Further, in Test Materials Nos. 27, 33, 39, 41, and 42, since buckling of the fin occurred, the SWAAT test was not performed. Those are indicated in Table 4 with the symbol"-".

### REFERENCE SIGNS LIST

1 Specimen
2 Platform
3 Fixing tool
4 Fin (fin material)
5 A3003 sheet
6 Fin
7 Tube
8 Pulling tool
D1, D2 Tensile direction

## Claims

1. An aluminum alloy brazing sheet for heat exchangers, the brazing sheet having, as a core alloy, an Al alloy consisting of Mn 0.6 to 2.0 mass%, Fe 0.05 to 0.5 mass%, Si 0.4 to 0.9 mass%, Zn 0.02 to 4.0 mass%, and optionally at least one of Zr 0.05 to 0.3 mass%, Cr 0.05 to 0.3 mass%, and Ti 0.05 to 0.3 mass%, with the balance being Al and unavoidable impurities; and as a skin alloy disposed on each surface of the core alloy, an Al alloy consisting of Si 6.0 to 13.0 mass%, Fe 0.05 to 0.80 mass%, Cu 0.05 to 0.45 mass%, and optionally Na 0.0001 to 0.1 mass% or Sr 0.0001 to 0.1 mass% with the balance being Al and unavoidable impurities,
wherein a ratio A/B of a number density A (particles/mm²) of Al-Mn-Fe-based or AI-Mn-Si-based precipitates having a particle size of 0.1 µm or more but less than 3.0 µm, and a number density B (particles/mm²) of precipitates having a particle size of 3.0 µm or more in the core alloy, satisfies a relationship: 50 ≤ A/B ≤ 500, and
wherein the sheet thickness of the brazing sheet is 40 µm to 100 µm.

2. A method of producing the aluminum alloy brazing sheet for heat exchangers according to claim 1, comprising the steps of:
cladding the skin alloy such that a clad ratio of the skin alloy is 5% to 15% on one surface, to form an Al alloy clad material;
heating the Al alloy clad material at 420°C to 500°C, followed by subjecting the resultant Al alloy clad material to hot rolling, cold rolling, and intermediate annealing; and
performing final cold-rolling of the resultant Al alloy clad material, to produce the brazing sheet with the sheet thickness of 40 µm to 100 µm.

## Patentansprüche

1. Hartlötblech aus einer Aluminiumlegierung für Wärmetauscher, wobei das Hartlötblech als eine Kernlegierung eine Al- Legierung, die aus 0,6 bis 2,0 Massen-% Mn, 0,05 bis 0,5 Massen-% Fe, 0,4 bis 0,9 Massen-% Si, 0,02 bis 4,0 Massen-% Zn, und gegebenenfalls mindestens einem von 0,05 bis 0,3 Massen-% Zr, 0,05 bis 0,3 Massen-% Cr und 0,05 bis 0,3 Massen-% Ti besteht, wobei der Rest Al und unvermeidbare Verunreinigungen sind; und als eine Haut- Legierung, die auf jeder Oberfläche der Kernlegierung angeordnet ist, eine Al-Legierung, die aus 6,0 bis 13,0 Massen-% Si, 0,05 bis 0,80 Massen-% Fe, 0,05 bis 0,45 Massen-% Cu und, gegebenenfalls, 0,0001 bis 0,1 Massen-% Na oder 0,0001 bis 0,1 Massen-% Sr besteht, wobei der Rest Al und unvermeidbare Verunreinigungen sind,
wobei in der Kernlegierung das Verhältnis A/B einer Anzahldichte A (Teilchen / mm²) von Al-Mn-Fe-basierten oder Al-Mn-Si-basierten Ausscheidungsprodukten, die eine Teilchengröße von 0,1 µm oder mehr, aber weniger als 3,0 µm aufweisen, und einer Anzahldichte B (Teilchen / mm²) von Ausscheidungsprodukten, die eine Teilchengröße von 3,0 µm oder mehr aufweisen, eine Beziehung: 50 ≤ A/B ≤ 500 erfüllt, und
wobei die Blechdicke des Hartlötblechs 40 µm bis 100 µm beträgt.

2. Verfahren zur Herstellung des Hartlötblechs aus einer Aluminiumlegierung für Wärmetauscher nach Anspruch 1, welches die Schritte umfasst:
das Plattieren der Haut- Legierung auf eine solche Weise, dass das Plattierungsverhältnis der Hautlegierung auf einer Oberfläche 5 % bis 15 % beträgt, um ein Material mit einer Al-Legierungsauflage zu bilden;
das Erhitzen des Materials mit der Al- Legierungsauflage auf 420 °C bis 500 °C, und anschließend das resultierende Material mit der Al- Legierungsauflage Heißwalzen, Kaltwalzen und Zwischenglühen unterziehen; und
das Durchführen eines abschließenden Kaltwalzens des resultierenden Materials mit der Al- Legierungsauflage, um das Hartlötblech mit der Blechdicke von 40 µm bis 100 µm herzustellen.

## Revendications

1. Tôle à brasage en alliage d'aluminium pour échangeurs de chaleur, la tôle à brasage ayant, en tant qu'alliage de coeur, un alliage d'Al consistant en 0,6 à 2,0 % en masse de Mn, 0,05 à 0,5 % en masse de Fe, 0,4 à 0,9 % en masse de Si, 0,02 à 4,0 % en masse de Zn, et au moins l'un parmi 0,05 à 0,3 % en masse de Zr, 0,05 à 0,3 % en masse de Cr, et 0,05 à 0,3 % en masse de Ti, le reste étant de l'Ai et des impuretés inévitables ; et, en tant qu'alliage de peau disposé sur chaque surface de l'alliage de coeur, un alliage d'Al consistant en 6,0 à 13,0 % en masse de Si, 0,05 à 0,80 % en masse de Fe, 0,05 à 0,45 % en masse de Cu, et éventuellement 0,0001 à 0,1 % en masse de Na ou 0,0001 à 0,1 % en masse de Sr, le reste étant de l'Al et des impuretés inévitables,
dans laquelle le rapport A/B de la densité en nombre A (particules/mm²) des précipités à base d'Al-Mn-Fe ou à base d'Al-Mn-Si ayant une granulométrie de 0,1 µm ou plus mais inférieure à 3,0 µm, à la densité en nombre B (particules/mm²) des précipités ayant une granulométrie de 3,0 µm ou plus dans l'alliage de coeur, satisfait à la relation : 50 ≤ A/B ≤ 500, et
dans laquelle l'épaisseur de tôle de la tôle à brasage est de 40 µm à 100 µm.

2. Procédé de production de la tôle à brasage en alliage d'aluminium pour échangeurs de chaleur selon la revendication 1, comprenant les étapes:
gainer l'alliage de peau de façon que le rapport de gainage de l'alliage de peau soit de 5 % à 15 % sur une surface, pour former un matériau de gaine en alliage d'Al ;
chauffer le matériau de gaine en alliage d'Al à une température de 420 °C à 500 °C, puis soumettre le matériau de gaine en alliage d'Al à un laminage à chaud, un laminage à froid, et un recuit intermédiaire ; et
effectuer un laminage à froid final du matériau de gaine en alliage d'Al résultant, pour produire la tôle à brasage avec une épaisseur de tôle de 40 µm à 100 µm.
